# FASCICULE DE BREVET EUROPEEN

(11) **EP 3 539 817 B1**
(45) Date de publication et mention de la délivrance du brevet: **30.12.2020**
(21) Numéro de dépôt: 19162534.2
(22) Date de dépôt: 13.03.2019
(51) Int. Cl.: B60N 2/16, B60N 2/18, F16B 37/08

(54) **SYSTÈME VIS-ÉCROU, PROCÉDÉ DE RÉGLAGE RAPIDE D'UN DISPOSITIF, TEL QU'UN REHAUSSEUR DE SIÈGE, COMPRENANT UN TEL SYSTÈME VIS-ÉCROU ET REHAUSSEUR DE SIÈGE COMPRENANT UN TEL SYSTÈME**
SCHRAUBMUTTERSYSTEM, VERFAHREN ZUR SCHNELLEN EINSTELLUNG EINES GERÄTS, WIE EIN SITZBEHÄLTER, DER EIN SOLCHES SCHRAUBMUTTERSYSTEM ENTHÄLT, UND SITZBOHRER MIT EINEM SOLCHEN SYSTEM
SCREW-NUT SYSTEM, METHOD FOR THE RAPID ADJUSTMENT OF A DEVICE, SUCH AS A SEAT BOOSTER, COMPRISING SUCH A SCREW-NUT SYSTEM AND SEAT BOOSTER COMPRISING SUCH A SYSTEM

(30) Priorité: 14.03.2018 FR 1852189
(43) Date de publication de la demande: 18.09.2019
(73) Titulaire: Arquus, 78000 Versailles (FR)
(72) Inventeur: Guyoumard, Gilles, 95280 Jouy-le-Moutier (FR)
(74) Mandataire: Lavoix

(56) Documents cités:
- DE-A1- 19 527 738
- GB-A- 2 041 062

## Description

### Domaine technique de l'invention

La présente invention concerne un rehausseur de siège, un ensemble comprenant un siège et un tel rehausseur, un véhicule équipé d'un tel ensemble et un procédé de réglage d'un tel rehausseur . L'invention trouve en particulier son application dans les sièges automobiles.

### Etat de la technique antérieure

Effectivement, il est connu d'utiliser un système vis-écrou pour régler la position du rehausseur. L'utilisateur agit sur le système en tournant une molette, dans un sens ou dans l'autre, ce qui a pour effet de monter ou descendre le siège.

Toutefois, un tel système vis-écrou atteint ses limites, en termes d'ergonomie et de confort d'utilisation, lorsque la plage de réglage est de grande amplitude. En effet, dans ce cas, l'utilisateur peut se retrouver à tourner la molette pendant un certain temps avant d'atteindre la position souhaitée, ce qui s'avère relativement agaçant, surtout lorsque la molette est difficile d'accès.

DE 195 27 738 A1 divulgue un dispositif de positionnement proposant deux modes de réglage possibles : rapide ou fin.

GB 2 041 062A divulgue la possibilité d'une application à un rehausseur de siège auto. Toutefois, ce système ne propose pas la possibilité d'effectuer un réglage fin, c'est-à-dire en utilisant la liaison vis-écrou puisqu'on retrouve un verrouillage en position lorsque les filets de la vis sont en prise avec ceux de l'écrou.

C'est à ces inconvénients qu'entend plus particulièrement remédier l'invention, en proposant un rehausseur de siège amélioré, avec un système vis-écrou qui offre la possibilité d'un réglage rapide ou fin de la position de la vis par rapport à l'écrou.

### Résumé de l'invention

A cet effet l'invention concerne un rehausseur de siège selon la revendication 1..

Grâce à l'invention, on peut faire coulisser la vis de deux façons distinctes, à savoir premièrement de façon rapide et deuxièmement de façon fine, par coopération entre les filets de la vis et ceux des deux écrous. Ces deux possibilités de réglage offrent une certaine ergonomie et un certain confort dans tous les systèmes utilisant un système vis-écrou dans lequel le filetage de la vis est relativement long.

Selon des aspects avantageux, mais non obligatoires de l'invention, un tel rehausseur de siège peut incorporer une ou plusieurs des caractéristiques suivantes ou décrites dans les revendications 2 à 8, prises dans toute combinaison techniquement admissible :
- La vis comprend au moins deux méplats, de préférence opposés selon un axe transversal de la vis.
- Chaque écrou comprend un orifice intérieur avec au moins deux tronçons filetés disposés, de préférence, de façon diamétralement opposée et au moins deux creux, également disposés, de préférence, de façon diamétralement opposée.
- Les écrous comprennent autant de tronçons filetés et autant de creux l'un par rapport à l'autre. Les tronçons filetés et les creux d'un écrou ont la même répartition sur la périphérie interne de l'écrou que les tronçons filetés et les creux de l'autre écrou.
- Les deux creux sont de forme circulaire.
- Chaque creux présente une largeur strictement supérieure à la côte de la vis, entre les deux méplats, suivant l'axe transversal de la vis.
- Dans la position de réglage rapide, les filets de la vis sont respectivement reçus dans les creux des deux écrous.
- Le système comprend des moyens de guidage pour maintenir la vis centrée lorsque la vis est dans la position de réglage rapide.
- Les moyens de guidage comprennent un palier à l'intérieur duquel est reçue la vis.
- Les deux écrous sont angulairement en phase lorsque des creux d'un écrou sont alignés avec des creux de l'autre écrou selon la direction d'un axe longitudinal de la vis. Autrement formulé, les deux écrous sont angulairement en phase lorsque les creux d'un écrou sont en vis-à-vis ou superposés avec les creux de l'autre écrou selon la direction de l'axe longitudinal de la vis.

L'invention concerne aussi un ensemble comprenant un siège et un rehausseur de siège tel que défini précédemment, ainsi qu'un véhicule équipé d'un tel ensemble.

De préférence, le rehausseur est un rehausseur de siège automobile.

Typiquement, il peut s'agir d'un véhicule militaire, comme un véhicule blindé par exemple.

L'invention concerne enfin un procédé de réglage rapide d'un rehausseur de siège, tel que décrit précédemment. Le procédé comprend des étapes consistant à :
a) faire tourner l'un des deux écrous par rapport à l'autre écrou jusqu'à parvenir dans la position où les deux écrous sont angulairement en phase,
b) faire tourner la vis jusqu'à parvenir dans la position de réglage rapide,
c) déplacer la vis en translation à l'intérieur des deux écrous pour effectuer un réglage rapide,
d) faire tourner l'un des deux écrous par rapport à l'autre écrou jusqu'à parvenir dans la position où les deux écrous sont angulairement déphasés,
e) faire tourner la vis pour effectuer un réglage fin par vissage de la vis à l'intérieur des deux écrous.

### Présentation des figures illustratives de l'invention

L'invention et d'autres avantages de celle-ci apparaitront plus clairement à la lumière de la description qui va suivre d'un mode de réalisation d'un système vis-écrou conforme à son principe, donnée uniquement à titre d'exemple et faite en référence aux dessins dans lesquels :
- les figures 1 et 2 sont des vues schématiques du système vis-écrou selon l'invention, dans une configuration de réglage rapide,
- les figures 3 et 4 sont des vues du système comparables aux figures 1 et 2 respectivement, dans une configuration de réglage fin,
- la figure 5 est une vue en perspective d'un rehausseur de siège, représenté en position basse, et comprenant le système vis-écrou des figures 1 à 4,
- la figure 6 est une coupe dans le plan VI de la figure 5,
- la figure 7 est une vue en perspective du rehausseur de siège de la figure 5, représenté en position haute, et
- la figure 8 est une coupe dans le plan VIII de la figure 7.

### Description détaillée d'un mode de réalisation de l'invention et des variantes

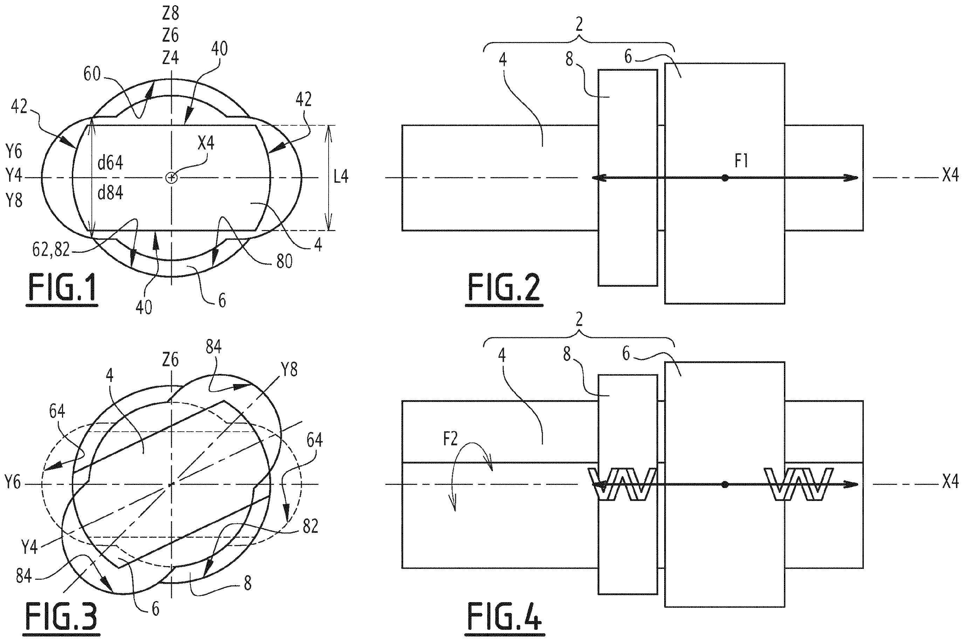

Les figures 1 à 4 représentent schématiquement le système vis-écrou 2 selon l'invention.

Le système 2 comprend une vis 4 et deux écrous 6 et 8.

La vis 4 s'étend selon un axe longitudinal X4. Elle définit par ailleurs, en section, c'est-à-dire dans un plan de coupe transversal à l'axe X4, un premier axe transversal Y4 et un second axe transversal Z4. Les axes X4, Y4 et Z4 sont par définition perpendiculaires deux à deux.

Avantageusement, la vis 4 comprend deux méplats 40 diamétralement opposés selon l'axe transversal Z4 de la vis 4. Les deux méplats 40 sont en fait des surfaces planes aménagées sur une pièce cylindrique, qui correspond à la vis 4. De préférence, les méplats 40 s'étendent sur toute la longueur de la vis 4. Les méplats 40 s'étendent perpendiculairement à l'axe Z4 et parallèlement à l'axe Y4. Dans des variantes de réalisation non représentées, la vis 4 peut comprendre plus que deux méplats, par exemple 3 ou 4 méplats régulièrement répartis sur la périphérie de la vis 4.

Les axes Y4 et Z4 de la vis 4 sont des axes de symétrie de la vis.

La vis 4 comprend également deux tronçons circulaires 42, qui comprennent les filets de la vis. Ces deux tronçons circulaires 42 sont diamétralement opposés selon l'axe transversal Y4 de la vis 4. Dans des variantes de réalisation non représentées, la vis 4 peut comprendre plus que deux tronçons circulaires 42, par exemple 3 ou 4 tronçons circulaires régulièrement répartis sur la périphérie de la vis 4 entre les méplats 40. La vis comprend autant de tronçons circulaires 42 que de méplats 40.

Dans l'exemple, les deux écrous 6 et 8 sont identiques. Toutefois, ils pourraient, en variante, présenter des points de différence.

La position angulaire relative, autour de l'axe X4 de la vis, entre les deux écrous 6 et 8 est réglable. Dans l'exemple, l'écrou 6 est prévu fixe, alors que l'écrou 8 peut être pivoté en rotation autour de la vis 4, c'est pourquoi l'écrou 8 est ici qualifié d'écrou « flottant ».

Chaque écrou 6 ou 8 comprend dans l'exemple un orifice intérieur 60 ou 80 avec deux tronçons filetés 62 ou 82 qui sont dans l'exemple disposés de façon diamétralement opposée suivant un axe Z6 ou Z8 et deux creux 64 ou 84, également disposés de façon diamétralement opposée, suivant un axe Y6 ou Y8, à l'intérieur de l'orifice correspondant 60 ou 80 de l'écrou. Les deux creux 64 ou 84 forment donc des renfoncements concaves à l'intérieur de l'orifice intérieur 60 ou 80 de l'écrou. Les écrous 6 et 8 peuvent comprendre plus que deux creux 64 ou 84 régulièrement répartis sur la périphérie interne des écrous. Il y a, de préférence, autant de creux que de de tronçons circulaires 42 sur la vis 4.

Les axes Y6 et Y8 peuvent être considérés comme des axes de référence, respectivement de l'écrou 6 et de l'écrou 8, et sont donc immobiles dans un repère associé à l'écrou 6 ou à l'écrou 8.

Le diamètre des tronçons filetés 62 et 82 est sensiblement identique à celui des tronçons filetés 42. Egalement, les filets des trois pièces sont complémentaires, c'est-à-dire que les filets sont de même espacement, de même largeur et avec la même inclinaison, de telle sorte que les tronçons filetés 62 et 82 des écrous 6 et 8 peuvent coopérer par vissage avec les tronçons circulaires 42 de la vis 4.

Les axes Y6 et Z6 sont perpendiculaires, tout comme les axes Z6 et Z8.

Selon un mode de réalisation préférentiel, les deux creux 64 ou 84 sont de forme circulaire. Notamment, le centre de leur cercle est disposé dans un plan contenant les axes Y6 et Z6 ou Y8 et Z8. D'autres formes peuvent être envisagées pour les creux 64 et 84, telles que des formes rectangulaires.

Avantageusement, les creux 64 ou 84 peuvent être conformés directement pendant le procédé de fabrication, lorsque l'écrou 6 ou 8 est fabriqué par injection dans un moule (moulage par injection) et que le matériau utilisé est un alliage léger (ex : alliage d'aluminium). Alternativement, lorsque le matériau utilisé est un matériau plus fortement allié et/ou plus dur (ex : acier), les creux 64 ou 84 peuvent être réalisés par usinage, par exemple, par brochage.

De façon astucieuse, chaque creux 64 ou 84 présente un diamètre d64 ou d84 strictement supérieur à la côte L4 de la vis 4 suivant l'axe transversal Z4.

Grâce aux formes spécifiques de la vis 4 et des deux écrous 6 et 8, le système vis-écrou est configuré de façon que lorsque les deux écrous 6 et 8 sont angulairement en phase, la vis 4 peut être orientée dans une position dite de réglage rapide (représentée à la figure 1) dans laquelle les filets 42 de la vis 4 sont placés dans les creux 64 et 84, et donc dans laquelle ils ne peuvent pas coopérer avec les filets 62 et 82 des deux écrous 6 et 8, et dans laquelle la vis 4 peut être déplacée librement en translation par rapport aux deux écrous 6 et 8, comme représenté par la flèche à double sens F1 à la figure 2.

Au sens du présent document, les deux écrous 6 et 8 sont considérés comme angulairement en phase lorsque les creux 64 et 84 sont en vis-à-vis lorsque l'on regarde dans la direction de l'axe longitudinal X4. Dans cette position, représentée à la figure 1, les axes Y6 et Y8 sont dans un même plan, lequel contient également l'axe longitudinal X4.

Cette position de réglage rapide permet, comme son nom l'indique, de pouvoir déplacer la vis rapidement à l'intérieur des deux écrous 6 et 8, et notamment de façon notablement plus rapide que lorsqu'il faut tourner la vis pour obtenir un déplacement en translation par coopération des filets de vissage.

La position de réglage rapide peut être définie comme une position angulaire spécifique de la vis 4, dans laquelle les tronçons filetés 42 de la vis sont disposés radialement (par rapport à l'axe X4) respectivement en regard des creux 64 et 84 aménagés à l'intérieur des écrous 6 et 8. Egalement, dans cette position de réglage rapide, les creux 64 et 84 des deux écrous 6 et 8 sont alignés deux à deux suivant deux axes parallèles à l'axe longitudinal X4 de la vis. Cela signifie que les deux écrous 6 et 8 ont exactement la même orientation angulaire autour de l'axe X4. Dans cette position, les axes Y4, Y6 et Y8 sont parallèles.

Egalement, le système vis-écrou 2 est configuré de façon que lorsque les deux écrous 6 et 8 sont angulairement déphasés (position de la figure 3), les filets de la vis 4 sont en prise avec les filets des deux écrous 6 et 8 quelle que soit l'orientation de la vis 4 autour de l'axe X4.

Dans cette position de déphasage, les axes Y6 et Y8 (tout comme les axes Z6 et Z8) sont non-parallèles, et forment entre eux un certain angle, que l'on appelle angle de déphasage. Dans la représentation de la figure 3, cet angle de déphasage est de l'ordre de 45°. Egalement, dans cette position de déphasage, les axes Y6 et Y8 ne sont pas contenus dans un même plan.

Dans cette position, la vis 4 peut être déplacée en translation par rapport aux écrous 6 et 8, en effectuant un mouvement de vissage normal, c'est-à-dire en tournant la vis 4 autour de son axe, comme représenté par la flèche à double sens F2 à la figure 4.

En pratique, le système 2 quitte la position de réglage rapide lorsque l'angle de déphasage dépasse un certain seuil, qui peut varier par exemple de 1° à 30°.

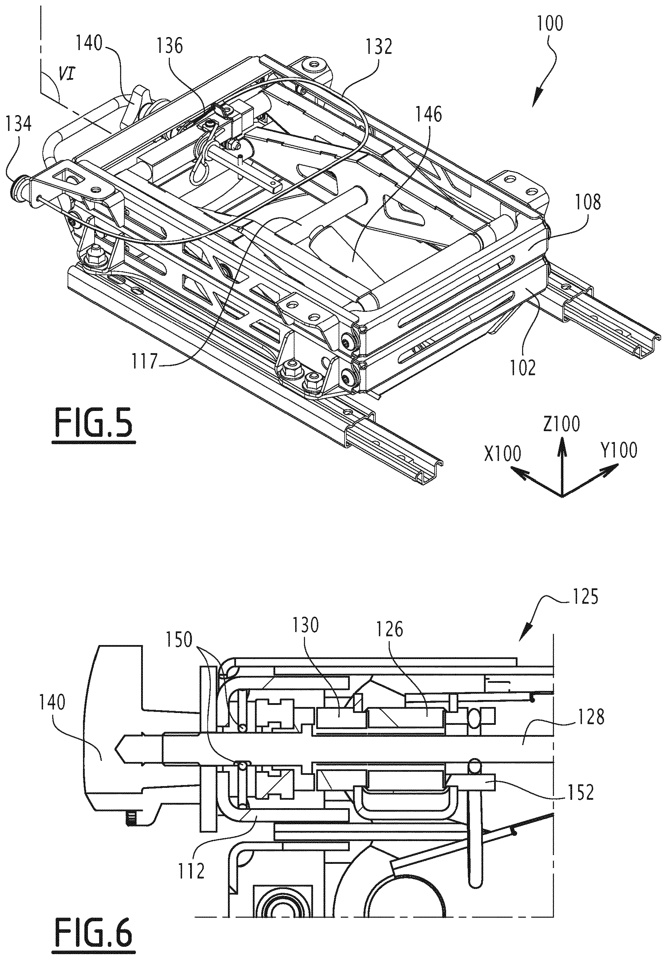

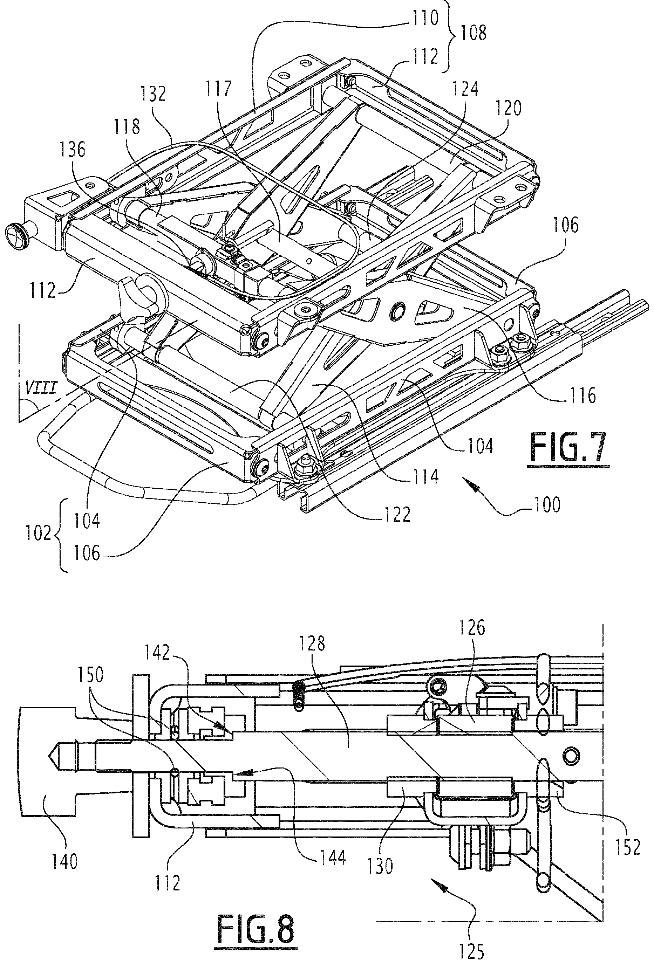

Les figures 5 à 8 montrent un exemple d'utilisation du système vis-écrou 2 décrit précédemment. Typiquement, il s'agit ici d'un rehausseur 100 de siège, notamment un rehausseur de siège pour un siège de véhicule. Toutefois, il est évident que le système vis-écrou 2 pourrait être utilisé dans n'importe quel autre dispositif utilisant un réglage à vis. Egalement, le véhicule n'est pas forcément un véhicule terrestre. Il peut également s'agir d'un avion, hélicoptère, etc.

Selon un mode de réalisation préférentiel, le véhicule est un véhicule militaire, notamment un véhicule blindé conçu pour résister à l'explosion de mines posées ou enfouies dans le sol.

Le siège n'est pas représenté sur les figures, car il n'y a aucune innovation à ce sujet.

Le rehausseur 100 définit un axe longitudinal X100, un axe transversal Y100 et un axe vertical Z100. Dans ce qui suit, l'adjectif « longitudinal » se rapporte à une direction parallèle à l'axe X100, l'adjectif « transversal » se rapporte à une direction parallèle à l'axe Y100 et l'adjectif « vertical » se rapporte à une direction parallèle à l'axe Z100.

Le rehausseur 100 comprend un cadre inférieur 102 comportant deux montants parallèles 104 et deux traverses parallèles 106 et un cadre supérieur 108 comportant également deux montants parallèles 110 et deux traverses parallèles 112. Les montants 104 et 110 s'étendent parallèlement à l'axe X100, alors que les traverses 106 et 112 s'étendent parallèlement à l'axe Y100.

Le rehausseur 100 comporte par ailleurs un mécanisme de réglage en hauteur, comprenant deux paires de bras articulés 114 et 116 en ciseaux autour d'un arbre central commun 117.

Les deux extrémités de chaque bras 114 ou 116 sont articulées l'une par rapport à l'autre autour d'un axe central d'articulation formé par l'arbre central commun 117 et chacune autour de deux axes d'articulations 118, 120, 122, 124. Il y a donc en tout cinq axes d'articulation, parmi lesquels deux d'entre eux 118, 120 sont logés au niveau du cadre supérieur 108, alors que deux autres 122, 124 sont logés au niveau du cadre inférieur 102.

On désignera par 118 et 120 les axes d'articulation du cadre supérieur 108 et par 122 et 124 les axes d'articulation du cadre inférieur 102.

Tous les axes d'articulation 117 à 124 s'étendent dans le sens transversal.

Dans l'exemple, l'axe 118 est monté coulissant dans le sens longitudinal, par coopération avec deux glissières aménagées respectivement dans les deux montants 110 du cadre supérieur 108.

L'axe 122 est également monté coulissant dans le sens longitudinal, par coopération avec deux glissières aménagées respectivement dans les deux montants 104 du cadre inférieur 102.

Les axes 120 et 124, en revanche, sont fixes par rapport aux cadres 102 et 108.

Le mécanisme de réglage en hauteur comprend un système vis-écrou 125, comprenant un écrou fixe 126, faisant partie de l'axe 118 et au travers duquel est reçue une vis de réglage 128. La vis 128 s'étend longitudinalement de manière parallèle à l'axe X100.

Par l'expression «écrou fixe », on entend ici que l'écrou 126 est immobile en rotation. Celui-ci est toutefois mobile en translation, avec l'axe 118, parallèlement à l'axe longitudinal X100.

Le mécanisme de réglage en hauteur comprend également un écrou flottant 130, qui est mobile en rotation, autour de la vis 128, entre une position dite de réglage rapide dans laquelle il est angulairement en phase avec l'écrou fixe 126 et une position déphasée dans laquelle il est angulairement déphasé par rapport à l'écrou fixe 126. La vis 128 est identique à la vis 4 représentée sur les figures 1 à 4, tandis que les écrous 126 et 130 sont respectivement identiques aux écrous 6 et 8 décrits supra, c'est pourquoi leurs caractéristiques ne sont pas détaillées plus avant.

Les écrous 126 et 130 sont disposés l'un derrière l'autre, c'est-à-dire sont alignés suivant une direction longitudinale.

Le mécanisme de réglage en hauteur comprend par ailleurs des moyens de commande de la rotation de l'écrou flottant 130. Ces moyens de commande comprennent dans l'exemple un câble 132, agencé pour tirer, directement ou indirectement, sur l'écrou flottant 130 de façon à le faire tourner de sa position déphasée, qui est la position par défaut, à la position de réglage rapide dans laquelle il est angulairement en phase avec l'écrou fixe 126.

Un bouton 134, prévu sur le côté du rehausseur 100, permet de commander manuellement la traction du câble 132.

Un ressort 136, permet de rappeler l'écrou flottant 130 en position déphasée, lorsque le bouton 134, qui est représenté ici sous la forme d'un bouton poussoir est relâché. Ce ressort 136 est attaché, d'une part, à l'écrou 130 et, d'autre part, à une extrémité du câble 132.

Il a été évoqué plus haut que l'écrou flottant 130 était mobile en rotation autour de la vis 128. Toutefois, pendant le réglage de la hauteur, l'écrou flottant 130 est immobile en rotation. Cette fonctionnalité de maintien de l'orientation angulaire de l'écrou 130 est assurée par des moyens spécifiques, formés dans l'exemple par le câble 132 et le ressort 136.

Evidemment, tout autre organe de traction, par exemple une cordelette, une chainette, une sangle, etc., pourra être utilisé en lieu et place du câble 126.

Une molette de réglage 140 est prévue à une extrémité de la vis 128, pour permettre à un utilisateur de tourner la vis 128 autour de son axe. Grâce à un système d'épaulements, la vis 128 est fixe en translation suivant son axe longitudinal.

Dans l'exemple, ce système d'épaulements comprend, d'une part, la molette 140 qui est en butée, directement ou indirectement, contre une paroi de la traverse 112 du cadre supérieur 108 et, d'autre part, un épaulement annulaire 142 prévu sur la surface extérieure de la vis 128, et coopérant avec un épaulement interne 144 de la traverse 112.

De préférence, le mécanisme de réglage en hauteur comprend un actionneur 146, tel qu'un vérin à gaz, pour déplacer automatiquement le rehausseur 100 vers une position haute lorsque la vis 128 est en position de réglage rapide. Ce vérin à gaz est un composant fermé, sans entretien et rempli avec un gaz sous haute pression, tel que de l'azote.

Dans l'exemple, l'actionneur 146 est agencé de façon à exercer, en permanence, un effort de poussée vers le haut sur l'arbre formant l'articulation 117.

Lorsque l'utilisateur souhaite monter rapidement son siège, il doit, d'une part, appuyer sur le bouton 134 de façon à orienter l'écrou flottant 130 en phase avec l'écrou 126 et, d'autre part, tourner la vis 128 d'un quart de tour, pour désengager les filets de la vis des filets des écrous 126 et 130. Le fait qu'il y ait deux actions distinctes à effectuer en simultané, procure une certaine sécurité de fonctionnement, dans la mesure où il faut que l'utilisateur utilise ses deux mains pour déverrouiller le mécanisme. Cette manœuvre ne pourra pas être effectuée par hasard, ou de façon inopinée.

Avantageusement, un système de clics, comprenant deux goupilles 150 montées sur ressort, permettent à l'utilisateur de détecter, à l'oreille, que la vis 128 est dans la position souhaitée. Les deux goupilles 150 sont agencées à 90° l'une par rapport à l'autre, chaque goupille générant un bruit sous forme de clic lorsque l'un des méplats de la vis parvient en regard de la goupille. Lorsque l'utilisateur entend un clic, il sait donc qu'il a fait une rotation d'un quart de tour.

Lorsque les filets de la vis 128 sont complètement désengagés des filets des écrous 126 et 130, le rehausseur 100 monte automatiquement en position haute sous l'effort de l'actionneur 146 exercé sur l'arbre 117. Pour arrêter le mouvement du rehausseur 100, l'utilisateur peut simplement relâcher le bouton 134, auquel cas l'écrou flottant 130 revient en position déphasée sous l'effort de rappel du ressort 136. L'utilisateur peut aussi tourner la vis 128 d'un quart de tour.

Avantageusement, le mécanisme de réglage en hauteur peut comprendre des moyens de guidage de la vis 128 en translation. Ces moyens peuvent s'avérer particulièrement utiles lorsque le système vis-écrou se trouve dans la configuration de réglage rapide, puisque, dans cette configuration, la vis 128 se trouve en porte à faux. Typiquement, ces moyens de guidage comprennent au moins un palier 152 formé à l'arrière de l'écrou 126, c'est-à-dire du côté opposé à l'écrou 130.

Selon un autre aspect avantageux de l'invention, le centrage de l'écrou flottant 130 et/ou du palier 152 sur l'axe de la vis 128 est effectué par l'écrou 126 lui-même. Pour ce faire, l'écrou 126 comprend deux logements, disposés à l'opposé l'un de l'autre selon une direction longitudinale, pour recevoir respectivement l'écrou flottant 130 et le palier 152.

On comprend donc que l'écrou flottant 130 et/ou le palier 152 coopère mécaniquement avec l'écrou fixe 126 de façon à être maintenu centré sur un axe géométrique commun, parallèle à l'axe X100. Cet axe géométrique commun est en principe confondu avec l'axe longitudinal de la vis 128.

Egalement, la coopération mécanique entre l'écrou flottant 130 et l'écrou fixe 126 permet de définir un certain jeu axial entre l'écrou flottant 130 et l'écrou fixe 126, ce jeu axial étant nécessaire à la bonne prise des filets de l'écrou flottant 130 avec les filets de la vis 128.

Par défaut, les écrous 126 et 130 sont déphasés angulairement l'un par rapport à l'autre. Toutefois, la hauteur du rehausseur 100 peut être réglée finement en tournant simplement la molette 140, ce qui a pour effet de faire tourner la vis 128 dans les filets des écrous 126 et 130. Les écrous 126 et 130 se déplacement alors tous les deux selon la même direction longitudinale, c'est-à-dire en avant ou en arrière, en fonction du sens de rotation de la molette 140.

L'axe d'articulation 118 se déplace alors longitudinalement dans les glissières des montants 110 et les bras articulés 114 et 116 s'articulent l'un avec l'autre.

On comprend donc que le rehausseur 100 selon l'invention permet à l'utilisateur de régler la hauteur du siège, soit de manière fine, comme effectué auparavant, soit rapidement, avec la commande de réglage rapide. L'invention permet donc d'augmenter sensiblement le confort et l'ergonomie d'utilisation du rehausseur.

En variante non représentée, le procédé de réglage peut être également appliqué à des tables d'usinage de grandes dimensions ou à tout autre ensemble élévateur ou coulissant.

Les caractéristiques du mode de réalisation décrit et des variantes non représentées peuvent être combinées entre elles pour générer de nouveaux modes de réalisation de l'invention.

position souhaitée. Les deux goupilles 150 sont agencées à 90° l'une par rapport à l'autre, chaque goupille générant un bruit sous forme de clic lorsque l'un des méplats de la vis parvient en regard de la goupille. Lorsque l'utilisateur entend un clic, il sait donc qu'il a fait une rotation d'un quart de tour.

Lorsque les filets de la vis 128 sont complètement désengagés des filets des écrous 126 et 130, le rehausseur 100 monte automatiquement en position haute sous l'effort de l'actionneur 146 exercé sur l'arbre 117. Pour arrêter le mouvement du rehausseur 100, l'utilisateur peut simplement relâcher le bouton 134, auquel cas l'écrou flottant 130 revient en position déphasée sous l'effort de rappel du ressort 136. L'utilisateur peut aussi tourner la vis 128 d'un quart de tour.

Avantageusement, le mécanisme de réglage en hauteur peut comprendre des moyens de guidage de la vis 128 en translation. Ces moyens peuvent s'avérer particulièrement utiles lorsque le système vis-écrou se trouve dans la configuration de réglage rapide, puisque, dans cette configuration, la vis 128 se trouve en porte à faux. Typiquement, ces moyens de guidage comprennent au moins un palier 152 formé à l'arrière de l'écrou 126, c'est-à-dire du côté opposé à l'écrou 130.

Selon un autre aspect avantageux de l'invention, le centrage de l'écrou flottant 130 et/ou du palier 152 sur l'axe de la vis 128 est effectué par l'écrou 126 lui-même. Pour ce faire, l'écrou 126 comprend deux logements, disposés à l'opposé l'un de l'autre selon une direction longitudinale, pour recevoir respectivement l'écrou flottant 130 et le palier 152.

On comprend donc que l'écrou flottant 130 et/ou le palier 152 coopère mécaniquement avec l'écrou fixe 126 de façon à être maintenu centré sur un axe géométrique commun, parallèle à l'axe X100. Cet axe géométrique commun est en principe confondu avec l'axe longitudinal de la vis 128.

Egalement, la coopération mécanique entre l'écrou flottant 130 et l'écrou fixe 126 permet de définir un certain jeu axial entre l'écrou flottant 130 et l'écrou fixe 126, ce jeu axial étant nécessaire à la bonne prise des filets de l'écrou flottant 130 avec les filets de la vis 128.

Par défaut, les écrous 126 et 130 sont déphasés angulairement l'un par rapport à l'autre. Toutefois, la hauteur du rehausseur 100 peut être réglée finement en tournant simplement la molette 140, ce qui a pour effet de faire tourner la vis 128 dans les filets des écrous 126 et 130. Les écrous 126 et 130 se déplacement alors tous les deux selon la même direction longitudinale, c'est-à-dire en avant ou en arrière, en fonction du sens de rotation de la molette 140.

L'axe d'articulation 118 se déplace alors longitudinalement dans les glissières des montants 110 et les bras articulés 114 et 116 s'articulent l'un avec l'autre.

On comprend donc que le rehausseur 100 selon l'invention permet à l'utilisateur de régler la hauteur du siège, soit de manière fine, comme effectué auparavant, soit rapidement, avec la commande de réglage rapide. L'invention permet donc d'augmenter sensiblement le confort et l'ergonomie d'utilisation du rehausseur.

En variante non représentée, le procédé de réglage peut être également appliqué à des tables d'usinage de grandes dimensions ou à tout autre ensemble élévateur ou coulissant.

Les caractéristiques du mode de réalisation décrit et des variantes non représentées peuvent être combinées entre elles pour générer de nouveaux modes de réalisation de l'invention.

## Revendications

1. Rehausseur de siège (100), comprenant un mécanisme de réglage en hauteur, le mécanisme de réglage en hauteur comprenant un système vis-écrou (2 ; 125) avec une vis (4 ; 128) et deux écrous (6, 8 ; 126, 130), dans lequel :
- la position angulaire relative entre les deux écrous est réglable,
- le système vis-écrou est configuré de façon que lorsque les deux écrous (6, 8 ; 126, 130) sont angulairement en phase, la vis (4 ; 128) peut être orientée dans une position de réglage rapide dans laquelle les filets de la vis ne coopèrent pas avec les filets des deux écrous et dans laquelle la vis peut être déplacée librement en translation par rapport aux deux écrous, tandis que lorsque les deux écrous (6, 8; 126, 130) sont angulairement déphasés, les filets (42) de la vis (4 ; 128) sont en prise avec les filets (62, 82) des deux écrous quelle que soit l'orientation de la vis, de façon à pouvoir effectuer un réglage fin par vissage de la vis (4 ; 128) à l'intérieur des deux écrous (6, 8 ; 126, 130),
- l'un (130) des deux écrous (126 ; 130) est mobile en rotation autour de la vis (128) entre une position de réglage rapide dans laquelle il est angulairement en phase avec l'autre écrou (126) et une position de réglage fin dans laquelle il est angulairement déphasé par rapport à l'autre écrou (126), lequel est de préférence fixe en rotation par rapport à la vis (128).
- le mécanisme de réglage en hauteur comprend des moyens (132, 134) de commande de la rotation de l'écrou mobile (130)
**caractérisé en ce que** les moyens de commande (132, 134) comprennent un organe de traction, tel qu'un câble (132), agencé pour tirer, directement ou indirectement, sur l'écrou mobile (130), de façon à le faire tourner de la position de réglage fin, qui est la position par défaut, à la position de réglage rapide.

2. Rehausseur de siège selon la revendication précédente, **caractérisé en ce qu'**un bouton (134) permet de commander manuellement la traction de l'organe (132).

3. Rehausseur de siège selon la revendication précédente, **caractérisé en ce qu'**un ressort (136) permet de rappeler l'écrou mobile (130) en position de réglage fin lorsque le bouton (134) est relâché.

4. Rehausseur de siège selon la revendication précédente, **caractérisé en ce que** le ressort (136) est attaché, d'une part, à l'écrou mobile (130) et, d'autre part, à une extrémité de l'organe de traction (132).

5. Rehausseur de siège selon l'une quelconque des revendications précédentes, **caractérisé en ce que** la vis (128) est immobile en translation suivant son axe longitudinal, le mécanisme de réglage en hauteur comprenant de préférence un système d'épaulements (140, 142, 144) pour immobiliser la vis (128) en translation.

6. Rehausseur de siège selon l'une quelconque des revendications précédentes, **caractérisé en ce que** le mécanisme de réglage en hauteur comprend une molette de réglage prévue à une extrémité de la tige (128), pour permettre à un utilisateur de tourner la vis autour de son axe longitudinal.

7. Rehausseur de siège selon l'une quelconque des revendications précédentes, **caractérisé en ce que** le mécanisme de réglage en hauteur comprend un système de clics comprenant deux goupilles (150) qui sont montées sur ressort et qui permettent à l'utilisateur de détecter, à l'oreille, que la vis (128) est dans la position souhaitée, les deux goupilles (150) étant de préférence agencées à 90° l'une par rapport à l'autre autour de la vis (128), de façon à générer un bruit de clic à chaque fois que la vis (128) fait un quart de tour.

8. Rehausseur de siège selon l'une quelconque des revendicationsprécédentes, **caractérisé en ce que** le mécanisme de réglage en hauteur comprend un palier (152) pour maintenir la vis (128) dans une position centrée lorsque les deux écrous (126, 130) sont angulairement en phase.

9. Ensemble comprenant un siège et un rehausseur de siège (100) selon l'une quelconque des revendicationsprécédentes.

10. Véhicule comprenant un ensemble selon la revendication précédente.

11. Procédé de réglage rapide d'un rehausseur de siège (100), conforme à l'une quelconque des revendications 1 à 8, **caractérisé en ce que** le procédé comprend des étapes consistant à :
a) faire tourner l'un (130) des deux écrous par rapport à l'autre écrou (126) jusqu'à parvenir dans la position où les deux écrous sont angulairement en phase,
b) faire tourner la vis (128) jusqu'à parvenir dans la position de réglage rapide,
c) déplacer la vis (128) en translation à l'intérieur des deux écrous (126, 130) pour effectuer un réglage rapide,
d) faire tourner l'un (130) des deux écrous par rapport à l'autre écrou (126) jusqu'à parvenir dans la position où les deux écrous sont angulairement déphasés,
e) faire tourner la vis (128) pour effectuer un réglage fin par vissage de la vis à l'intérieur des deux écrous.

## Patentansprüche

1. Vorrichtung (100) zur Sitzerhöhung, die einen Höheneinstellmechanismus umfasst, wobei der Höheneinstellmechanismus ein Schrauben-Mutter-System (2; 125) mit einer Schraube (4; 128) und zwei Muttern (6, 8; 126, 130) aufweist, bei der:
- die relative Winkelposition zwischen den zwei Muttern einstellbar ist,
- das Schrauben-Mutter-System derart ausgebildet ist, dass, wenn die zwei Muttern (6, 8; 126, 130) winkelmäßig in Phase sind, die Schraube (4; 128) in eine Position zur Schnelleinstellung gerichtet werden kann, in der die Gewindegänge der Schraube nicht mit den Gewindegängen der zwei Muttern zusammenarbeiten und in der die Schraube translatorisch in Bezug auf die zwei Muttern bewegbar ist, während, wenn die zwei Muttern (6, 8; 126, 130) winkelmäßig außer Phase sind, die Gewindegänge (42) der Schraube (4; 128) im Eingriff mit den Gewindegängen (62, 82) der zwei Muttern sind, wie auch immer die Orientierung der Schraube sei, derart, dass eine Feineinstellung durch Einschrauben der Schraube (4; 128) in das Innere der zwei Muttern (6, 8; 126, 130) vorgenommen werden kann,
- eine (130) der zwei Muttern (126; 130) drehbeweglich um die Schraube (128) ist zwischen einer Position der Schnelleinstellung, in der sie winkelmäßig in Phase mit der anderen Mutter (126) ist, und einer Position der Feineinstellung, in der sie winkelmäßig außer Phase in Bezug auf die andere Mutter (126) ist, die vorzugsweise drehfest in Bezug auf die Schraube (128) ist,
- der Höheneinstellmechanismus Mittel (132, 134) zum Steuern der Drehung der beweglichen Mutter (130) umfasst,
**dadurch gekennzeichnet, dass** die Steuermittel (132, 134) ein Zugelement, wie ein Kabel (132), umfassen, das ausgebildet ist, direkt oder indirekt an der beweglichen Mutter (130) zu ziehen, um sie von der Position der Feineinstellung, die die Standardposition ist, in die Position der Schnelleinstellung zu bringen.

2. Vorrichtung zur Sitzerhöhung nach dem vorhergehenden Anspruch, **dadurch gekennzeichnet, dass** ein Knopf (134) ermöglicht, das Ziehen des Elementes (132) manuell zu steuern.

3. Vorrichtung zur Sitzerhöhung nach dem vorhergehenden Anspruch, **dadurch gekennzeichnet, dass** eine Feder (136) ermöglicht, die bewegliche Mutter (130) in die Position der Feineinstellung zurückzubringen, wenn der Knopf (134) losgelassen wird.

4. Vorrichtung zur Sitzerhöhung nach dem vorhergehenden Anspruch, **dadurch gekennzeichnet, dass** die Feder (136) einerseits an der beweglichen Mutter (130) und andererseits an einem Ende des Zugelementes (132) befestigt ist.

5. Vorrichtung zur Sitzerhöhung nach einem beliebigen der vorhergehenden Ansprüche, **dadurch gekennzeichnet, dass** die Schraube (128) translatorisch gemäß ihrer Längsachse nicht beweglich ist, wobei der Höheneinstellmechanismus vorzugsweise ein Schultersystem (140, 142, 144) umfasst, um die Schraube (128) translatorisch festzulegen.

6. Vorrichtung zur Sitzerhöhung nach einem beliebigen der vorhergehenden Ansprüche, **dadurch gekennzeichnet, dass** der Höheneinstellmechanismus ein Einstellrad umfasst, das an einem Ende des Schaftes (128) vorgesehen ist, um einer Bedienperson zu ermöglichen, die Schraube um ihre Längsachse zu drehen.

7. Vorrichtung zur Sitzerhöhung nach einem beliebigen der vorhergehenden Ansprüche, **dadurch gekennzeichnet, dass** der Höheneinstellmechanismus ein Klicksystem mit zwei Stiften (150) umfasst, die federnd angebracht sind und die einer Bedienperson ermöglichen, hörbar zu detektieren, dass die Schraube (128) in der gewünschten Position ist, wobei die zwei Stifte (150) vorzugsweise zueinander um 90° um die Schraube (128) angebracht sind, um ein Klickgeräusch jedes Mal zu erzeugen, wenn die Schraube (128) eine Viertelumdrehung macht.

8. Vorrichtung zur Sitzerhöhung nach einem beliebigen der vorhergehenden Ansprüche, **dadurch gekennzeichnet, dass** der Höheneinstellmechanismus ein Lager (152) umfasst, um die Schraube (128) in einer zentrierten Position zu halten, wenn die zwei Muttern (126, 130) winkelmäßig in Phase sind.

9. Anordnung mit einem Sitz und einer Vorrichtung (100) zur Sitzerhöhung nach einem beliebigen der vorhergehenden Ansprüche.

10. Fahrzeug, eine Anordnung nach dem vorhergehenden Anspruch umfassend.

11. Verfahren zur Schnelleinstellung einer Vorrichtung (100) zur Sitzerhöhung nach einem beliebigen der Ansprüche 1 bis 8, **dadurch gekennzeichnet, dass** das Verfahren die Schritte umfasst die darin bestehen:
a) Drehen einer (130) der zwei Muttern in Bezug auf die anderen Mutter (126) bis zu einer Position, in der die zwei Muttern winkelmäßig in Phase sind,
b) Drehen der Schraube (128) bis zu der Position der Schnelleinstellung,
c) translatorisches Bewegen der Schraube (128) im Inneren der zwei Muttern (126, 130), um eine Schnelleinstellung durchzuführen,
d) Drehen einer (130) der zwei Muttern in Bezug auf die anderen Mutter (126) bis in die Position, in der die zwei Muttern winkelmäßig außer Phase sind,
e) Drehen der Schraube (128), um eine Feineinstellung durch Einschrauben der Schraube in das Innere der zwei Muttern durchzuführen.

## Claims

1. Height adjuster for a seat (100) comprising a height adjustment mechanism, the height adjustment mechanism comprising a bolt-nut system (2; 125) having one bolt (4; 128) and two nuts (6, 8; 126, 130), in which:
- the relative angular position between the two nuts is adjustable,
- the bolt-nut system is configured such that when the two nuts (6, 8; 126, 130) are angularly in phase, the bolt (4; 128) can be orientated in a rapid adjustment position in which the threads of the bolt do not cooperate with the threads of the two nuts and in which the bolt can be displaced freely in translation relative to the two nuts, whilst when the two nuts (6, 8; 126, 130) are angularly out of phase, the threads (42) of the bolt (4; 128) are engaged with the threads (62, 82) of the two nuts whatever the orientation of the bolt so as to be able to effect a fine adjustment by screwing the bolt (4; 128) inside the two nuts (6, 8; 126, 130),
- one (130) of the two nuts (126; 130) is mobile in rotation about the bolt (128) between a rapid adjustment position in which it is angularly in phase with the other nut (126) and a fine adjustment position in which it is angularly out of phase relative to the other nut (126), which is preferably fixed in rotation relative to the bolt (128),
- the height adjustment mechanism comprises means (132, 134) for controlling the rotation of the mobile nut (130),
**characterised in that** the control means (132, 134) comprise a drive member, such as a cable (132) fitted in order to pull, directly or indirectly, on the mobile nut (130) so as to turn it from the fine adjustment position, which is the default position, to the rapid adjustment position.

2. Height adjuster for a seat according to the preceding claim, **characterised in that** a button (134) makes it possible to control manually the drive of the member (132).

3. Height adjuster for a seat according to the preceding claim, **characterised in that** a spring (136) makes it possible to return the mobile nut (130) into the fine adjustment position when the button (134) is released.

4. Height adjuster for a seat according to the preceding claim, **characterised in that** the spring (136) is attached, on the one hand, to the mobile nut (130) and, on the other hand, to one end of the drive member (132).

5. Height adjuster for a seat according to any of the preceding claims, **characterised in that** the bolt (128) is immobile in translation along the longitudinal axis thereof, the height adjustment mechanism comprising preferably a system of shoulders (140, 142, 144) in order to immobilise the bolt (128) in translation.

6. Height adjuster for a seat according to any of the preceding claims, **characterised in that** the height adjustment mechanism comprises an adjustment wheel provided at one end of the rod (128) in order to allow a user to turn the bolt about the longitudinal axis thereof.

7. Height adjuster for a seat according to any of the preceding claims, **characterised in that** the height adjustment mechanism comprises a system of clicks comprising two pins (150) which are mounted on a spring and which make it possible for the user to detect, by ear, that the bolt (128) is in the desired position, the two pins (150) being preferably fitted at 90°, one with respect to the other, about the bolt (128), so as to generate a clicking noise each time the bolt (128) makes a quarter turn.

8. Height adjuster for a seat according to any of the preceding claims, **characterised in that** the height adjustment mechanism comprises a bearing (152) in order to retain the bolt (128) in a central position when the two nuts (126, 130) are angularly in phase.

9. Assembly comprising a seat and a height adjuster for a seat (100) according to any of the preceding claims.

10. Vehicle including an assembly according to the preceding claim.

11. Method for rapid adjustment of a height adjuster for a seat (100) according to any of claims 1 to 8, **characterised in that** the method comprises the steps consisting of:
a) turning one (130) of the two nuts relative to the other nut (126) until it reaches the position where the two nuts are angularly in phase,
b) turning the bolt (128) until it reaches the rapid adjustment position,
c) displacing the bolt (128) in translation inside the two nuts (126, 130) in order to effect a rapid adjustment,
d) turning one (130) of the two nuts relative to the other nut (126) until it reaches the position where the two nuts are angularly out of phase,
e) turning the bolt (128) in order to effect a fine adjustment by screwing the bolt inside the two nuts.
